# FASCICULE DE BREVET EUROPEEN

(11) **EP 3 720 713 B1**
(45) Date de publication et mention de la délivrance du brevet: **16.04.2025**
(21) Numéro de dépôt: 18826435.2
(22) Date de dépôt: 06.12.2018
(51) Int. Cl.: B33Y 80/00, B33Y 40/00, B29C 64/40, B29C 64/30, F02C 7/045, G10K 11/16, G10K 11/172, B64D 33/02, G10K 11/162

(54) **PROCÉDÉ DE FABRICATION D'UN RÉSEAU ORDONNÉ DE MICRO-CANAUX ACOUSTIQUES INTERCONNECTÉS**
VERFAHREN ZUR HERSTELLUNG EINER GEORDNETEN ANORDNUNG VON MITEINANDER VERBUNDENEN AKUSTISCHEN MIKROKANÄLEN
METHOD FOR PRODUCING AN ORDERED ARRAY OF INTERCONNECTED ACOUSTIC MICROCHANNELS

(30) Priorité: 06.12.2017 FR 1761710; 06.12.2017 CA 2988222
(43) Date de publication de la demande: 14.10.2020
(73) Titulaire: Safran Aircraft Engines, 75015 Paris (FR)
(72) Inventeur: MARDJONO, Jacky, Novi, 77550 Moissy-Cramayel (FR); DUBOURG, Arnaud, Montreal Québec H3W 1T5 (CA); FOTSING, Edith-Roland, Montreal Québec H3C 3A7 (CA); ROSS, Annie, Montreal Québec H3C 3A7 (CA)
(74) Mandataire: Cabinet Beau de Loménie
(86) Numéro de dépôt international: PCT/FR2018/053135
(87) Numéro de publication internationale: WO 2019/110940

(56) Documents cités:
- EP-A1- 2 996 110
- FR-A1- 2 953 058
- US-A1- 2004 226 620

## Description

### Arrière-plan de l'invention

La présente invention se rapporte au domaine général de la fabrication de pièces en matériaux polymères, notamment thermodurcissables, par fabrication additive et elle concerne la fabrication d'un revêtement acoustique de paroi d'une turbomachine telle qu'un turboréacteur d'avion.

Le contrôle des nuisances sonores dues aux avions aux alentours des aéroports est devenu en enjeu de santé public. Des normes et règlements de plus en plus sévères sont imposés aux fabricants d'avions et aux gestionnaires d'aéroports. Par conséquent, construire un avion silencieux est devenu au fil des années un argument de vente marquant. Actuellement, le bruit généré par les moteurs d'avions est atténué par des revêtements acoustiques à réaction localisée qui permettent de diminuer l'intensité sonore du moteur sur un ou deux octaves sur le principe des résonateurs de Helmholtz. Ces revêtements se présentent classiquement sous la forme de panneaux composites composés d'une plaque rigide associée à une âme nid d'abeille recouvert d'une peau perforée. Toutefois, dans les moteurs de nouvelle génération (par exemple dans les moteurs à turbosoufflantes), les zones disponibles pour les revêtements acoustiques sont amenées à se réduire considérablement comme dans la technologie UHBR (Ultra-High-Bypass-Ratio).

Il est donc important de proposer des nouveaux procédés et/ou de nouveaux matériaux (notamment des matériaux poreux) permettant d'éliminer ou de réduire de façon significative le niveau de bruit produit généré par les moteurs d'avion surtout dans les phases de décollage et d'atterrissage et sur une gamme fréquentielle plus large qu'actuellement incluant les basses fréquences tout en conservant les performances du moteur. C'est la raison pour laquelle on cherche aujourd'hui de nouvelles technologies de réduction de bruit pour diminuer cette nuisance et ceci avec un impact minimal sur les autres fonctionnalités du moteur comme la consommation spécifique de carburant qui constitue un avantage commercial important.

Par ailleurs, il est aujourd'hui courant et avantageux d'avoir recours à des procédés de fabrication additive en lieu et place des procédés traditionnels de fonderie, de forge ou d'usinage dans la masse pour réaliser facilement, rapidement et à moindre coût des pièces tridimensionnelles complexes. Le domaine aéronautique se prête d'ailleurs particulièrement bien à l'utilisation de ces procédés. Parmi ceux-ci, on peut citer notamment le procédé de dépôt énergétique direct par fil (Wire Beam Deposition) décrit dans la demande US2004/0226620.

La demande FR2953058 décrit, selon son abrégé, une peau acoustique pour un panneau acoustique d'une nacelle d'aéronef, ladite peau comprenant une pluralité de couches empilées de rubans plan composites dirigés chacun par leur axe longitudinal définissant une direction, les axes longitudinaux des rubans d'une même couche étant parallèles entre eux, lesdits rubans de ladite même couche étant espacés les uns des autres de sorte à présenter des ouvertures acoustiques dans la peau acoustique.

### Objet et résumé de l'invention

La présente invention a donc pour but de proposer une méthode de mise en forme d'un nouveau matériau, pouvant réduire de manière significative le bruit généré par les turboréacteurs d'avion sur une large gamme de fréquences allant des basses aux hautes fréquences. Les revêtements acoustiques issus de cette méthode sont destinés à être montés sur une paroi d'une turbomachine en contact avec un écoulement fluidique et plus particulièrement un carter de soufflante.

A cet effet, selon la revendication 1, il est prévu un procédé de fabrication d'un revêtement acoustique de paroi de turbomachine dans un réseau ordonné de micro-canaux interconnectés destiné à recevoir sur une surface de réception une onde acoustique incidente de direction Ac normale à cette surface, le procédé consistant à :
déposer un matériau sacrificiel sur une surface de substrat pour former un échafaudage tridimensionnel de filaments,
infiltrer au moins une partie dudit échafaudage tridimensionnel par un matériau thermodurcissable,
solidifier ledit matériau thermodurcissable pour former un matériau solidifié, et
retirer ledit matériau sacrificiel dudit matériau solidifié pour former réseau ordonné de micro-canaux interconnectés par les points de contact entre lesdits filament, procédé dans lequel, pour conférer des propriétés acoustiques au dit réseau ordonné de micro-canaux interconnectés et ainsi former ledit revêtement acoustique de paroi de turbomachine, lesdits filaments formant par couches superposées ledit échafaudage tridimensionnel sont, pour une couche de filaments donnée, orientés selon une direction faisant dans un plan formé par ladite couche un premier angle θ prédéterminé par rapport à la direction Ac de ladite onde acoustique incidente.

Ainsi, on obtient une microstructure poreuse à porosité régulière et ordonnée qui assure une absorption importante des ondes acoustiques par dissipation visco-thermique au sein des micro-canaux.

De préférence, lesdits filaments présentent un diamètre ou une largeur de section différent selon leur direction d'orientation dans ledit échafaudage tridimensionnel.

Selon une configuration particulière, lesdites couches superposées formant ledit échafaudage tridimensionnel comportent des filaments orientés pour les unes selon ledit premier angle θ et pour les autres selon un second angle -θ, une couche de filaments orientés selon ledit premier angle θ succédant à une couche de filaments orientés selon ledit premier angle -θ.

Avantageusement, ledit angle prédéterminé est compris entre 25° et 40°, typiquement 32°.

De préférence, le taux de remplissage dudit échafaudage tridimensionnel est d'au moins 70%.

Avantageusement, ledit matériau sacrificiel est une encre organique ou une cire naturelle.

De préférence, ledit matériau thermodurcissable est une résine polymère et avantageusement une résine photo-polymérisable.

Avantageusement, le diamètre ou la largeur de section des filaments est inférieur à 250 microns.

### Brève description des dessins

D'autres caractéristiques et avantages de la présente invention ressortiront de la description détaillée faite ci-dessous, en référence aux figures suivantes dépourvues de tout caractère limitatif et sur lesquelles :
- la figure 1A illustre en perspective éclatée un premier exemple de montage d'un échafaudage tridimensionnel de filaments conforme à l'invention,
- la figure 1B illustre en perspective éclatée un second exemple de montage d'un échafaudage tridimensionnel de filaments conforme à l'invention,
- la figure 2 est une vue de l'échafaudage tridimensionnel de la figure 1 une fois montée,
- la figure 3 est une vue du réseau ordonné de micro-canaux acoustiques interconnectés obtenus à partir de l'échafaudage tridimensionnel de la figure 2, et
- la figure 4 montre un exemple de revêtement acoustique comportant le réseau de la figure 3.

### Description détaillée de l'invention

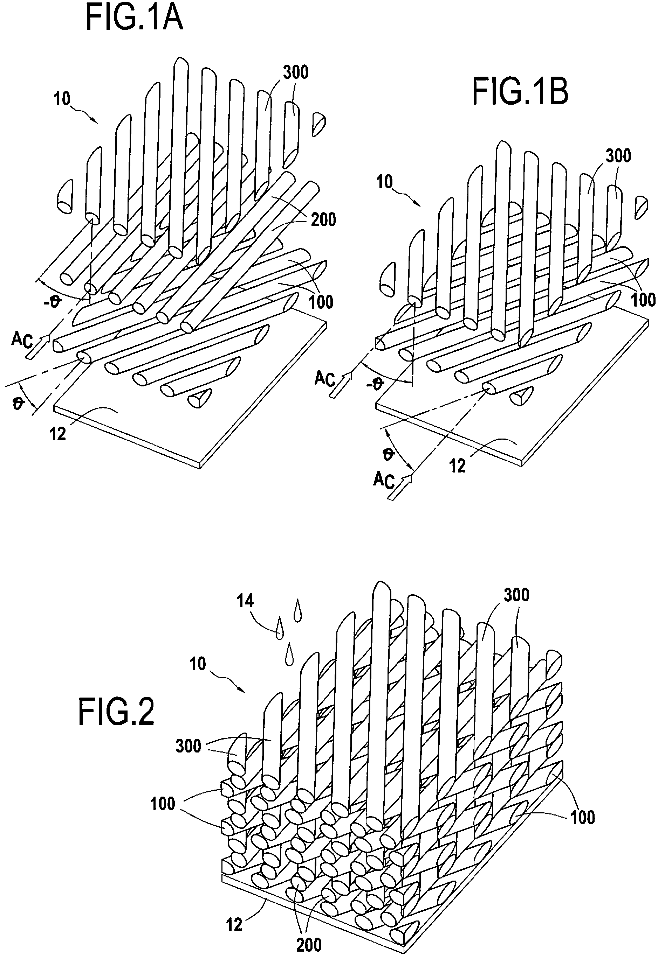

La figure 1A illustre en perspective éclatée une partie d'un échafaudage tridimensionnel 10 de filaments 100, 200, 300, avantageusement cylindriques, d'un matériau sacrificiel permettant, conformément à l'invention, la réalisation d'un réseau ordonné de micro-canaux acoustiques interconnectés de nature à conférer des propriétés acoustiques à une paroi destinée à recevoir sur une surface de réception une onde acoustique incidente de direction Ac normale à cette surface. Cette paroi est préférentiellement, sans que cela ne soit limitatif, une paroi d'une turbomachine telle qu'un turboréacteur d'avion.

La fabrication d'un réseau ordonné de micro-canaux interconnectés est effectuée par fabrication additive selon le procédé décrit dans la demande US2004/0226620 Ce procédé permet de déposer à l'aide d'une tête d'impression adaptée des filaments cylindriques d'un matériau sacrificiel de diamètres de moins de 1000 µm selon un tracé spécifié par l'utilisateur. Par coulée gravitaire, l'échafaudage tridimensionnel du matériau sacrificiel est ensuite imprégné par un matériau thermodurcissable. Une fois le matériau thermodurcissable solidifié, on chauffe le produit obtenu à une température supérieure à la température de fonte (typiquement supérieur à 60°) du matériau sacrificiel pour le faire fondre et ainsi révéler le réseau ordonné de micro-canaux, de la taille et de la forme des filaments cylindriques du matériau sacrificiel dans le matériau solidifié obtenu. Des interconnections entre les micro-canaux existent de manière régulière aux points de contact entre les filaments lors de la superposition des différentes couches du matériau sacrificiel destinées à générer ces micro-canaux. Il s'agit donc au final d'un moule réalisé par fabrication additive.

Conformément à l'invention, pour conférer des propriétés acoustiques au réseau ordonné de micro-canaux interconnectés obtenu par ce procédé, les filaments 100, 200, 300 qui forment par couches superposées l'échafaudage tridimensionnel 10 sont orientés, lors de leur dépôt successif sur un substrat 12 et au niveau d'une couche donnée, selon une direction d'orientation faisant dans l'espace (les deux droites n'étant pas coplanaires mais disposées dans deux plans parallèles) un angle θ prédéterminé par rapport à la direction Ac de l'onde acoustique incidente venant impacter perpendiculairement la surface de réception. Ainsi, à une première couche de filaments 100 présentant une direction inclinée de l'ordre de 30° (typiquement 32°) par rapport à cette direction de l'onde acoustique incidente succède une deuxième couche 200 présentant une inclinaison de l'ordre de 0° (donc une direction supposée parallèle à l'onde acoustique incidente Ac) puis une troisième couche 300 présentant une direction inclinée de typiquement -32° (de même valeur que l'inclinaison initiale mais de signe opposé) par rapport à la direction de l'onde acoustique incidente. Le dépôt des couches superposées suivantes se poursuit jusqu'au dépôt de la dernière couche selon la même succession de couches de filaments 100, 200, 300 et donc les mêmes différentes orientations.

L'angle d'inclinaison précité de 32° ne saurait être limitatif et les inventeurs ont pu relever qu'un angle θ compris entre 25° et 40° permettait d'obtenir des propriétés acoustiques satisfaisantes.

De même, la figure 1B illustre un échafaudage tridimensionnel différent de filaments dans lequel à une couche de filaments 100 orientés dans le plan horizontal formé par cette couche selon un angle de l'ordre de 30° par rapport à la direction Ac de l'onde acoustique incidente succède une couche de filaments 300 orientés selon un angle opposé de l'ordre de -30° par rapport à cette même direction Ac de l'onde acoustique incidente.

On pourra noter que si les filaments lorsqu'ils sont cylindriques présentent avantageusement le même diamètre, un diamètre différent selon la direction d'orientation dans l'échafaudage tridimensionnel peut toutefois être envisagé. Il en est de même lorsque ces filaments ont une section non circulaire, par exemple elliptique.

La figure 2 montre l'échafaudage tridimensionnel 10 obtenu une fois les couches superposées de filaments déposées successivement depuis le substrat 12 et qui sera imprégné du matériau thermodurcissable 14. Le diamètre ou la largeur de section des filaments est choisi de préférence inférieur à 250 microns et le taux de remplissage de l'échafaudage tridimensionnel est choisi de telle sorte qu'il soit d'au moins 70%.

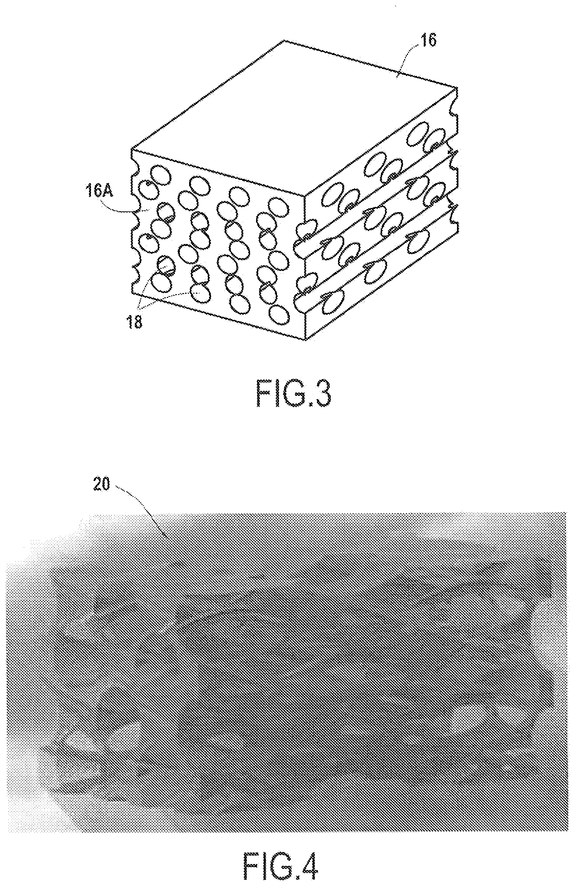

La structure finale illustrée à la figure 3 après retrait du matériau sacrificiel (un exemple réel de revêtement acoustique 20 de paroi de turbomachine obtenu par le procédé de l'invention est illustré à la figure 4) possède donc des micro-canaux de section constante interconnectés (cette interconnexion résultant comme dit précédemment des points de contact entre les filaments sacrificiels) qui forment un réseau poreux 18 au sein duquel l'onde acoustique va pouvoir se propager et s'atténuer en interagissant avec le squelette rigide 16 formé par le matériau thermodurcissable. La microstructure est directement contrôlée par l'impression du matériau sacrificiel par fabrication additive. Le squelette rigide permet quant à lui de donner les propriétés de résistance mécanique grandement supérieures à celles rencontrées par exemple avec les mousses stochastiques actuelles commercialisées comme revêtement acoustique. Par ailleurs, le squelette rigide étant constitué d'un matériau thermodurcissable, il possède donc une grande stabilité chimique, ce qui est un atout dans le cas d'implantation dans des zones soumises à différents agents chimiques agressifs comme c'est le cas dans un turboréacteur d'avion. Enfin, la nature poreuse du matériau entraine une réduction de masse du revêtement acoustique et donc une réduction de coûts, notamment par une baisse de consommation de l'énergie et une augmentation de la charge utile.

Le matériau sacrificiel est avantageusement une encre organique ou une cire naturelle qui doit pouvoir être mise en forme par impression avec des diamètres ou largeurs de section de filament faibles (typiquement inférieurs à 250 microns), rapidement et dont le retrait doit être simple et sous une température n'altérant pas le matériau thermodurcissable. Un matériau comportant une pâte bleue de Prusse comme la Loctite^{™} ou un matériau bi-composant formé d'une cire microcristalline (type SP18) et d'un dérivé de pétrole à faible poids moléculaire comme la vaseline^{™} est préférée.

Le matériau thermodurcissable doit avoir un comportement absorbant et notamment une bonne capacité d'infiltration (basse viscosité) pour imprégner parfaitement, typiquement par gravité, l'échafaudage en respectant sa géométrie et une tenue mécanique suffisante pour supporter l'élimination du matériau sacrificiel sans altération. Il devra en outre être faiblement exothermique pour que la chaleur dégagée lors de sa solidification ne fasse pas fondre le matériau sacrificiel. Un matériau à base de résine polymère comme l'époxy, ou encore une résine photo-polymérisable, cette dernière permettant d'obtenir des échantillons de plus grandes dimensions, convient donc tout à fait.

## Revendications

1. Procédé de fabrication d'un revêtement acoustique de paroi de turbomachine dans un réseau ordonné de micro-canaux interconnectés (18) destiné à recevoir sur une surface de réception une onde acoustique incidente de direction (Ac) normale à cette surface, le procédé consistant à :
déposer un matériau sacrificiel sur une surface de substrat (12) pour former un échafaudage tridimensionnel de filaments (100, 200, 300),
infiltrer au moins une partie dudit échafaudage tridimensionnel (10) par un matériau thermodurcissable (14),
solidifier ledit matériau thermodurcissable pour former un matériau solidifié (16), et
retirer ledit matériau sacrificiel dudit matériau solidifié pour former ledit réseau ordonné de micro-canaux interconnectés par les points de contact entre lesdits filaments,
procédé dans lequel, pour conférer des propriétés acoustiques au dit réseau ordonné de micro-canaux interconnectés et ainsi former ledit revêtement acoustique de paroi de turbomachine, lesdits filaments formant par couches superposées ledit échafaudage tridimensionnel sont, pour une couche de filaments donnée, orientés selon une direction faisant dans un plan formé par ladite couche un premier angle (Θ) prédéterminé par rapport à la direction (Ac) de ladite onde acoustique incidente.

2. Procédé de fabrication selon la revendication 1, **caractérisé en ce que** lesdits filaments présentent un diamètre ou une largeur de section différent selon leur direction d'orientation dans ledit échafaudage tridimensionnel.

3. Procédé de fabrication selon la revendication 1, **caractérisé en ce que** lesdites couches superposées formant ledit échafaudage tridimensionnel comportent des filaments orientés pour les unes selon ledit premier angle (Θ) et pour les autres selon un second angle (-Θ), une couche de filaments orientés selon ledit premier angle (Θ) succédant à une couche de filaments orientés selon ledit premier angle (-Θ)

4. Procédé de fabrication selon la revendication 1 ou la revendication 2, **caractérisé en ce que** ledit angle (Θ) prédéterminé est compris entre 25° et 40°, typiquement 32°.

5. Procédé de fabrication selon l'une quelconque des revendications 1 à 4, **caractérisé en ce que** le taux de remplissage dudit échafaudage tridimensionnel est d'au moins 70%.

6. Procédé de fabrication selon l'une quelconque des revendications 1 à 5, **caractérisé en ce que** ledit matériau sacrificiel est une encre organique ou une cire naturelle.

7. Procédé de fabrication selon l'une quelconque des revendications 1 à 6, **caractérisé en ce que** ledit matériau thermodurcissable est une résine polymère.

8. Procédé de fabrication selon la revendication 7, **caractérisé en ce que** ladite résine polymère est une résine photo-polymérisable.

9. Procédé de fabrication selon l'une quelconque des revendications 1 à 8, **caractérisé en ce que** le diamètre ou la largeur de section des filaments est inférieur à 250 microns.

## Patentansprüche

1. Verfahren zur Herstellung einer akustischen Turbomaschinen-Wandverkleidung in einem geordneten Netz von miteinander verbundenen Mikrokanälen (18), die dazu bestimmt sind, auf einer Empfangsfläche eine einfallende akustische Welle mit Richtung (Ac) senkrecht zu dieser Fläche zu empfangen, wobei das Verfahren aus Folgendem besteht:
Aufbringen eines Opfermaterials auf eine Substratfläche (12), um ein dreidimensionales Filamentgerüst (100, 200, 300) zu bilden, Infiltrieren mindestens eines Teils des dreidimensionalen Gerüsts (10) mit einem wärmehärtenden Material (14),
Verfestigen des wärmehärtenden Materials, um ein verfestigtes Material (16) zu bilden, und
Entfernen des Opfermaterials aus dem verfestigten Material, um das geordnete Netz von Mikrokanälen zu bilden, die durch die Kontaktpunkte zwischen den Filamenten miteinander verbunden sind,
Verfahren, in dem,
um dem geordneten Netz von miteinander verbundenen Mikrokanälen akustische Eigenschaften zu verleihen und dadurch die akustische Turbomaschinen-Wandverkleidung zu bilden, die Filamente, die in übereinanderliegenden Schichten das dreidimensionale Gerüst bilden,
für eine gegebene Schicht von Filamenten, gemäß einer Richtung ausgerichtet sind, die in einer von der Schicht gebildeten Ebene einen vorbestimmten ersten Winkel in Bezug auf die Richtung (Ac) der einfallenden akustischen Welle bildet.

2. Herstellungsverfahren nach Anspruch 1, **dadurch gekennzeichnet, dass** die Filamente je nach ihrer Ausrichtungsrichtung in dem dreidimensionalen Gerüst einen unterschiedlichen Durchmesser oder eine unterschiedliche Querschnittsbreite aufweisen.

3. Herstellungsverfahren nach Anspruch 1, **dadurch gekennzeichnet, dass** die übereinanderliegenden Schichten, die das dreidimensionale Gerüst bilden, Filamente umfassen, die bei den einen gemäß dem ersten Winkel (Θ) und bei den anderen gemäß einem zweiten Winkel (- Θ) ausgerichtet sind, wobei eine Schicht von Filamenten, die gemäß dem ersten Winkel (Θ) ausgerichtet sind, auf eine Schicht von Filamenten folgt, die gemäß dem ersten Winkel (-Θ) ausgerichtet sind.

4. Herstellungsverfahren nach Anspruch 1 oder Anspruch 2, **dadurch gekennzeichnet, dass** der vorbestimmte Winkel (Θ) zwischen 25° und 40°, normalerweise 32°, liegt.

5. Herstellungsverfahren nach einem der Ansprüche 1 bis 4, **dadurch gekennzeichnet, dass** der Füllgrad des dreidimensionalen Gerüsts mindestens 70 % ist.

6. Herstellungsverfahren nach einem der Ansprüche 1 bis 5, **dadurch gekennzeichnet, dass** das Opfermaterial eine organische Tinte oder ein natürliches Wachs ist.

7. Herstellungsverfahren nach einem der Ansprüche 1 bis 6, **dadurch gekennzeichnet, dass** das wärmehärtende Material ein Polymerharz ist.

8. Herstellungsverfahren nach Anspruch 7, **dadurch gekennzeichnet, dass** das Polymerharz ein photopolymerisierbares Harz ist.

9. Herstellungsverfahren nach einem der Ansprüche 1 bis 8, **dadurch gekennzeichnet, dass** der Durchmesser oder die Querschnittsbreite der Filamente weniger als 250 Mikrometer ist.

## Claims

1. A manufacturing method of an acoustic wall coating of a turbomachine in an ordered array of interconnected micro-channels (18) intended to receive, on a reception surface, an incident acoustic wave with direction (Ac) normal to this surface, the method consisting in:
depositing a sacrificial material on a substrate surface (12) to form a three-dimensional scaffold of filaments (100, 200, 300),
infiltrating at least one part of said three-dimensional scaffold (10) with a thermosetting material (14),
solidifying said thermosetting material to form a solidified material (16), and
removing said sacrificial material from said solidified material to form said ordered array of interconnected micro-channels by the points of contact between said filaments,
method wherein, to confer acoustic properties to said ordered array of interconnected micro-channels and thus form said acoustic wall coating of a turbomachine, said filaments forming by superimposed layers said three-dimensional scaffold are, for a given layer of filaments, oriented in a direction forming, in a plane formed by said layer, a first predetermined angle (θ) relative to the direction (Ac) of said incident acoustic wave.

2. The manufacturing method according to claim 1, **characterized in that** said filaments have a different diameter or cross-section width depending on their orientation direction in said three-dimensional scaffold.

3. The manufacturing method according to claim 1, **characterized in that** said superimposed layers forming said three-dimensional scaffold include filaments oriented, for some, according to said first angle (θ) and, for others, according to a second angle (-θ), a layer of filaments oriented according to said first angle (θ) following a layer of filaments oriented according to said first angle (-θ).

4. The manufacturing method according to claim 1 or claim 2, **characterized in that** said predetermined angle (θ) is comprised between 25° and 40°, typically 32°.

5. The manufacturing method according to any one of claims 1 to 4, **characterized in that** the fill rate of said three-dimensional scaffold is at least 70%.

6. The manufacturing method according to any one of claims 1 to 5, **characterized in that** said sacrificial material is an organic ink or a natural wax.

7. The manufacturing method according to any one of claims 1 to 6, **characterized in that** said thermosetting material is a polymer resin.

8. The manufacturing method according to claim 7, **characterized in that** said polymer resin is a photo-polymerizing resin.

9. The manufacturing method according to any one of claims 1 to 8, **characterized in that** the diameter or the cross-section width of the filaments is less than 250 microns.
